# EUROPÄISCHE PATENTSCHRIFT

(11) **EP 0 733 686 B1**
(45) Veröffentlichungstag und Bekanntmachung des Hinweises auf die Patenterteilung: **01.10.2003**
(21) Anmeldenummer: 96104126.6
(22) Anmeldetag: 15.03.1996
(51) Int. Cl.: C09D 161/32, C08J 3/07

(54) **Wässrige Dispersionen von veretherten Aminoplastharzen und ihre Verwendung als Härtungsmittel in wässrigen Lacksystemen**
Aqueous dispersions of etherified amino resins and their use as hardening agents in aqueous coating compositions
Dispersions aqueuses de résines aminoplastes éthérifiées et leur utilisation comme agents de durcissement dans des compositions de revêtement aqueuses

(30) Priorität: 23.03.1995 DE 19510520
(43) Veröffentlichungstag der Anmeldung: 25.09.1996
(73) Patentinhaber: Surface Specialties Germany GmbH & Co. KG, 65203 Wiesbaden (DE)
(72) Erfinder: Schön, Manfred, Dr., 63110 Rodgau (DE); Kubillus, Uwe, Dr., 65195 Wiesbaden (DE); Oswald, Harald, 65719 Hofheim (DE); Necke, Hilmar, 63457 Hanau (DE)
(74) Vertreter: Deckers, Hellmuth, Dr.

(56) Entgegenhaltungen:
- EP-A- 0 140 323
- EP-A- 0 698 638
- DE-A- 2 503 389
- DE-A- 3 741 282
- US-A- 4 005 052
- DATABASE WPI Week 7843 Derwent Publications Ltd., London, GB; AN 78-77374 XP002021818 & JP-A-53 108 129 (HONEY CHEM. IND. KK) , 20.September 1978
- DATABASE WPI Week 8647 Derwent Publications Ltd., London, GB; AN 86-308852 XP002021819 & JP-A-61 228 031 (MITSUBISHI GAS CHEM. KK) , 11.Oktober 1986
- DATABASE WPI Week 9111 Derwent Publications Ltd., London, GB; AN 91-076181 XP002021820 & JP-A-03 021 673 (DAINIPPON INK CHEM. KK) , 30.Januar 1991
- PATENT ABSTRACTS OF JAPAN vol. 12, no. 248 (C-511), 13.Juli 1988 & JP-A-63 035664 (NIPPON OIL & FATS CO. LTD.), 16.Februar 1988,
- CHEMICAL ABSTRACTS, vol. 98, no. 20, 16.Mai 1983 Columbus, Ohio, US; abstract no. 162601x, XP002021817 & JP-A-58 002 316 (NIPPON OILS AND FATS CO., LTD.) 7.Januar 1983

## Beschreibung

Die vorliegende Erfindung betrifft wäßrige Dispersionen von Aminoplastharzen, insbesondere Melamin-Formaldehydharze, Benzoguanamin-Formaldehyd-Harze und Harnstoff-Formaldehyd-Harze in Dispersionsform, ein Verfahren zu ihrer Herstellung und ihre Verwendung als Härter und Zumischkomponente in wäßrigen Lacksystemen.

Die Verwendung von methyl-, butyl-, isobutyl- und äthyl-verätherten Melamin-Formaldehyd-Harzen als auch Mischformen derselben und entsprechende Äther auf Basis von Benzoguanamin- und verwandten Triazinderivaten in Einbrennsystemen ist seit langem bekannt. Diese Harze werden in diesen Systemen häufig in der Praxis angewandt. Butylierte Aminoplastharze zeigen vor allem eine gute Verträglichkeit mit organischen Lösemitteln und konventionellen Kunstharzen wie etwa Acryl-, Polyester-, Alkyd-, Epoxid- und Phenolharzen als auch Mischungen derselben. Die entsprechenden Methyläther sind verträglich sowohl mit organischen Lösemitteln und deren Gemischen und Kunstharzen, als auch aufgrund ihres polaren Charakters mit Wasser oder Gemischen von Wasser mit polaren Lösemitteln wie Glykoläthern, Glykolätheracetaten, N-Methylpyrrolidon und mit wäßrigen gelösten oder dispergierten Kunstharzsystemen. Methyläther führen in konventionellen Systemen zu ausgesprochen festkörperreichen, lösemittelarmen Lacksystemen, in wäßrigen Systemen zeigen sie gute Reaktivität, Lagerstabilität und tragen zum Festkörpergehalt solcher Lacke bei.

Aufgrund der Hydrophilie der methylierten Aminoplastharze zeigen Beschichtungen aus wäßrigen Lacksystemen häufig eine unzureichende Resistenz gegenüber Wasser, Wasserdampf oder wäßrigen Agenzien. Es hat daher nicht an Versuchen gefehlt, die hydrophoberen Butyläther in wäßrigen Systemen anzuwenden, um diesen Nachteil zu vermeiden. Ein in einer Mischung von niedrigsiedenden Kohlenwasserstoffen dispergiertes Hexabutoxymethylmelamin ist erhältlich als sogenannte "nichtwäßrige Dispersion" ("non-aqueous dispersion", NAD). Diese Dispersion ist jedoch mit wäßrigen Kunstharzdispersionen nicht verträglich.

Günstig ist die Tatsache, daß Butyläther in Kombination mit wäßrigen Systemen eine sehr hohe Reaktivität zeigen und die Formulierung von Niedrigtemperatursystemen zulassen würden. Das Einbringen von butylierten Aminoplastharzen in wäßrige Kunstharze führt jedoch stets zu trüben, milchigen Filmen mit unzureichendem Eigenschaftsprofil. Aufgrund der Unverträglichkeit beobachtet man eine Phasentrennung in entsprechenden pigmentierten und unpigmentierten Systemen, sie sind also nicht lagerstabil.

Verschiedene Methoden sind denkbar, um butylierte Aminoplastharze in wäßrige Kunstharze einzubringen: durch Einmischen in die Kunstharze direkt oder vor deren Neutralisation und Dispergierung in Wasser, durch Ankondensieren an Kunstharzen vor deren Neutralisation und Dispergierung, durch Einführen von funktionellen Gruppen in die Aminoplastharze, die die Wasserlöslichkeit oder Dispergierbarkeit erhöhen wie etwa Carboxylgruppen, Sulfonsäuregruppen u.ä., deren Neutralisation mit tertiären Aminen oder anorganischen Basen und nachfolgende Dispergierung der Harze.

Ebenso hat es viele Versuche gegeben, butylierte Aminoplastharze, gegebenenfalls in Kombination mit hydrophilen Aminoplastharzen, in wäßrige Systeme einzurühren unter Bildung einer Emulsion.

So werden beispielsweise in der Japanischen Patentanmeldung JP 69-003 096 wäßrige Emulsionen von Bindemitteln beschrieben, die mit Oxyalkylderivaten von Fettsäureamiden emulgiert sind. Unter anderen werden auch Aminoplastharze erwähnt. Die Stabilität dieser Emulsionen ist jedoch unzureichend.

In der Japanischen Patentanmeldung JP 05-170 852 wird eine Methode beschrieben, butylverätherte Aminoplastharze ohne Emulgatorzusatz in Wasser zu emulgieren. Zum Vermischen müssen jedoch sehr hohe Drücke angewandt werden.

In der US-Patentschrift 2 680 101 ist ein Verfahren zur Emulgierung von methylolierten Aminoplastbildnern unter Verwendung von alkalilöslichen Proteinderivaten als Emulgator beschrieben, wobei mindestens eine Methylolgruppe mit einer Fettsäure mit mehr als 8 Kohlenstoffatomen verestert ist. Durch den verwendeten Emulgator ergeben sich Vergilbungsprobleme beim Einbrennen dieser Emulsionen.

Sämtliche Versuche dieser Art sind an der mangelnden Stabilität des Lacks und der unzureichenden Qualität der Beschichtungen gescheitert, die das hohe Qualitätsniveau der konventionellen Lacksysteme nicht erreichen können.

Der einfachste Ansatz, ein wasserunlösliches Harz in Dispersionsform zu überführen, ist die Fremdemulgierung durch ein geeignetes Emulgatorsystem. Ein derartiges System ist in der DE-A 37 41 282 beschrieben. Hier wird als Dispergiermittel eine Kombination einer kationischen Stärke und eines geläufigen Dispergierhilfsmittels verwendet. Das hier eingesetzte Melaminharz ist im Mittel an 5 bzw. 5,5 Mol der Methylolgruppen methylveräthert, die restlichen Gruppen sind mit einem langkettigen Fettalkohol, einer Fettsäure oder einem Fettsäureamid modifiziert. Die notwendige Menge an Dispergierhilfsmittel ist 10 bis 25 %, bezogen auf die Masse des Harzes. Solche Systeme zeigen durch den kombinierten Effekt der Hydrophilie der Methoxymethylgruppen und den hohen Gehalt an Emulgator eine hohe Wasseraufnahme und führen daher nicht zu befriedigenden Beschichtungen. Der im resultierenden Lackfilm verbliebene Emulgator verschlechterte die Beständigkeit gegenüber Feuchtigkeit über das vertretbare Maß.

In der EP-A 0 698 638 (veröffentlicht am 28. 02. 1996, Stand der Technik unter Artikel 54(3) EPÜ für die Länder BE, DE, FR, GB, IT, LU und NL) werden vernetzbare wäßrige Dispersionen von hydroxyfunktionellen Polydien-Polymeren und Aminharzen beschrieben. Dabei werden nichtionische oder anionische Tenside zur Bildung stabiler Dispersionen des Polymeren und des Aminharzes in Wasser eingesetzt.

Die EP-A 0 140 323 betrifft wäßrige Dispersionen auf Basis von ölfreien Polyestem oder Alkydharzen, Aminoplastharzen, blockierten Polyisocyanaten und gegebenenfalls Emulgatoren, wobei die Aminoplastharze wasserlöslich sein müssen.

Die DE-A 25 03 389 offenbart ein Verfahren zur Herstellung von ofentrocknenden Alkydharzen, wobei Alkydharze mit weitgehend mit Monoalkoholen verätherten Aminoharzen kondensiert werden bis zu einer Grenzviskosität, die 15 bis 40 % über der des Alkydharzes liegt.

In der JP-A 03-021 673 werden Zusammensetzungen beschrieben, die wasserlösliche oder in Wasser dispergierbare filmbildende Harze A und wasserlöslich oder in Wasser dispergierbar gemachte Vernetzer B enthalten, die durch Kondensation von wasserunlöslichen alkylverätherten Melaminharzen b1 und wasserlöslichen Verbindungen b2 erhalten werden, die mit b1 reaktive funktionelle Gruppen aufweisen.

Es war daher überraschend zu finden, daß bereits sehr kleine Mengen anionischer Emulgatoren in der Lage sind, butylverätherte Aminoplastharze auf Basis Melamin, Benzoguanamin und verwandten Triazinderivaten in stabile, feinteilige Dispersionen zu überführen. Die erfindungsgemäßen anionischen Emulgatoren sind beispielsweise auf Basis von äthoxyliertem Nonylphenol aufgebaut.

Die Erfindung betrifft daher feinteilige, lagerstabile wäßrige Dispersionen von butylverätherten Aminoplastharzen, ein Verfahren zu ihrer Herstellung und ihre Anwendung als Härterkomponente in Lacksystemen, die Hydroxylgruppenhaltige Bindemittel enthalten.

Gegenstand der Erfindung sind wäßrige Dispersionen von butylverätherten Aminoplastharzen, dadurch gekennzeichnet, daß sie
10 bis 50 % eines butylverätherten oder teilweise butylverätherten Aminoplastharzes,
0 bis 15 % eines linearen oder verzweigten Alkanols mit 1 bis 10 Kohlenstoffatomen,
89,9 bis 32,5 % Wasser und
0,1 bis 5,5 % anionische Emulgatoren enthalten, wobei die Masse des Emulgators bis zu 2 % der Masse des Aminoplastharzes beträgt.

Für die Erfindung geeignete butylverätherte Aminoplastharze sind Reaktionsprodukte von Aldehyden, vorzugsweise Formaldehyd, Glyoxal, und Furfurol, mit den sogenannten Aminoplastbildnern wie Harnstoff, Thioharnstoff, Melamin, anderen Triazinen wie Acetoguanamin, Benzoguanamin, Caprinoguanamin, Ammelin, Ammelid, und cyclischen Harnstoffderivaten wie Äthylenharnstoff (2-Imidazolidinon), Propylenharnstoff (Tetrahydro-2-pyrimidinon) und Acetylenharnstoff (Glykoluril).

Die für die Erfindung geeigneten butylverätherten Aminoplastharze sind ganz oder teilweise verätherte Reaktionsprodukte der oben genannten Aldehyde mit den oben genannten Aminoplastbildnern, bei denen die Wasserstoffatome der Hydroxylgruppen ganz oder teilweise durch einen niedrigen linearen oder verzweigten Alkylrest mit 4 Kohlenstoffatomen ersetzt wurden. Besonders geeignet sind die ganz oder teilweise verätherten N-Methylolmelamine, wie Hexa-n- oder isobutoxymethylmelamin, Tributoxymethyl-trimethylolmelamin und die entsprechenden Harnstoffderivate.

Bei dem erfindungsgemäßen Verfahren werden Aminoplastharze in Substanz oder in Form von konzentrierten Lösungen von Aminoplastharzen vorzugsweise in n- oder iso-Butanol, gegebenenfalls gemischt mit Xylol in einem geeigneten Homogenisator in Wasser dispergiert. Der Emulgator kann der Aminoplastharzlösung oder dem Wasser zugesetzt werden. Die erforderliche Emulgatormenge liegt bei bis zu 2 %, bezogen auf die Masse des Aminoplastharzes. Vorzugsweise werden 0,1 bis 2 % Emulgator zugesetzt, bezogen auf die Masse des Aminoplastharzes.

Erfindungsgemäße Emulgatoren weisen mindestens ein hydrophobes Segment und mindestens ein hydrophiles Segment auf. Das hydrophobe Segment ist ausgewählt aus linearen, verzweigten oder cyclischen Alkyl- oder Alkylengruppen mit 3 bis 20 Kohlenstoffatomen, sowie aus aromatischen Resten mit 6 bis 30 Kohlenstoffatomen, wobei gegebenenfalls einzelne aromatische Reste durch direkte Bindungen, oder Alkylen-, Alkyliden-, Äther-, Carbonyl-, Sulfon-, Azo-, Carbonamid- oder Thioäther-Brücken miteinander verbunden sein können. Das hydrophile Segment kann kationisch, anionisch, oder nichtionisch sein. Kationische Gruppen werden beispielsweise gebildet durch organisch substituierte Ammonium-, Phosphonium- oder Sulfoniumverbindungen, oder auch beispielsweise durch organisch substituierte Amine, die vor, während oder nach der Bildung der Emulsion durch Säurezusatz protoniert werden. Anionische Gruppen werden beispielsweise gebildet durch Carboxyl-, Sulfonsäure-, Sulfinsäure- oder Phosphonsäuregruppen, die durch Zusatz von Basen wie oben beschrieben in eine ionische Form überführt werden können. Bevorzugt sind solche Emulgatoren, die zwei oder mehr hydrophile Segmente aufweisen, von denen in besonders bevorzugter Weise jeweils mindestens eines ionischen Charakter und eines nichtionischen Charakter hat. Bevorzugt ist als ionisches Segment eine anionische Gruppe oder eine Gruppe, die in Wasser unter Bildung eines Kations und des anionischen Emulgatorrestes dissoziiert. Vorzugsweise sind die Kationen (Gegenionen) Alkali- oder Erdalkalimetall-Kationen oder - gegebenenfalls organisch substituierte - Ammonium- oder Phosphoniumkationen. Das nichtionische Segment des Emulgators ist ein Molekülteil, der auf Grund seiner Struktur mit Wasser eine ausreichende Anzahl von Wasserstoffbrücken bilden kann. Beispiele für geeignete nichtionische hydrophile Segmente sind Polyoxyalkylenätherketten abgeleitet von Oxyäthylen- und 1,2-Oxypropylenbausteinen jeweils allein oder in Mischung, sowie stark polare Gruppen wie Säureamidstrukturen in entsprechend großer Zahl und enger räumlicher Nachbarschaft.

Die erfindungsgemäßen Dispersionen lassen sich durch Vermischen des Aminoplastharzes mit dem Emulgator und anschließendes Mischen mit Wasser herstellen. Es ist auch möglich, den Emulgator zuerst in Wasser zu lösen und anschließend das Aminoplastharz unter Scherung zuzugeben. Das Aminoplastharz kann in Substanz oder in Lösung zugegeben werden. Als Lösungsmittel eignen sich besonders lineare oder verzweigte Alkanole mit 1 bis 10 Kohlenstoffatomen, besonders bevorzugt werden die zur Verätherung benutzten Alkanole eingesetzt. Die Vermischung der beiden Phasen kann bei Raumtemperatur oder erhöhter Temperatur vorgenommen werden, von 20 bis 95 °C, bevorzugt bei 50 bis 90 °C.

Für die Herstellung der erfindungsgemäßen Dispersionen eignen sich vor allem schnellaufende Mischer, beispielsweise Mischer vom Rotor-Stator-Typ mit engen Spalten, die eine effiziente Durchmischung gewährleisten. Andere geeignete Mischer sind sog. Hochdruckmischer, bei denen die zu dispergierende Flüssigkeit unter hohem Druck durch eine Düse in das Dispergiermedium eingespritzt wird. Weiter geeignet sind Ultraschallmischer, in denen die erforderliche Oberflächenarbeit durch die eingebrachte Schallenergie geleistet wird.

Die nach dem beschriebenen Verfahren erhaltenen Dispersionen haben einen Feststoff-Massengehalt von ca. 20 bis 80, bevorzugt 40 bis 60 %, ihre Konsistenz ist wasserähnlich mit Newtonschem Fließverhalten.

Die erfindungsgemäßen Dispersionen lassen sich mit allen Vertretern wäßriger Dispersionen oder Lösungen von Kunstharzen - vorzugsweise wäßrigen Acrylharz-Dispersionen oder -Lösungen, Polyesterharz-Dispersionen bzw. -Lösungen, Alkydharz-Dispersionen oder -Lösungen, Epoxidharz-Dispersionen oder -Lösungen, Phenolharz-Dispersionen oder -Lösungen - in sinnvollen Kombinationen von ca. 60 : 40 (Massenanteil Kunstharz/Aminoplastharz, jeweils als Festsubstanz) bis 90 : 10 einsetzen und bei erhöhten Temperaturen von 60 bis 350 °C in 0,5 bis 90 Minuten zu harten, haftfesten, chemikalien- und wetterbeständigen (vor allem bei der Kombination Acryl/Polyesterharz) Filmen vernetzen. Die Aushärtung kann unkatalysiert oder katalysiert erfolgen, wobei geeignete Katalysatoren z.B. Ammoniumsalze der p-Toluolsulfonsäure, Phosphorsäure oder Maleinsäure sind.

Die erfindungsgemäßen Dispersionen eignen sich besonders als Härter in wäßrigen Lacksystemen auf Basis von hydroxylgruppenhaltigen Alkyd-, Polyester-, Polyurethan-, Acryl- und Phenolharzen, Polyvinylacetat, Polyvinylbutyral und Epoxidharzen sowie deren Mischungen.

Die vorliegende Erfindung betrifft auch Lacksysteme auf Basis der obengenannten hydroxylgruppenhaltigen Bindemittelharze, dadurch gekennzeichnet, daß sie als Härterkomponente eine erfindungsgemäße Dispersion enthalten. Solche Lacksysteme können in Form von Einkomponentensystemen formuliert werden. Werden die erfindungsgemäßen Aminoplastharzdispersionen in Kombination mit anderen Härtern eingesetzt, so lassen sich auch vorteilhaft Zwei-Komponenten-Lacke formulieren. Besonders vorteilhaft können die erfindungsgemäßen Aminoplastharz-Dispersionen gemeinsam mit wäßrigen Dispersionen von hydrophilen mehrfunktionellen Isocyanaten kombiniert werden, wobei diese in blockierter Form (Einkomponentenlack) oder unblockierter Form (Zweikomponentenlack) vorliegen können.

Solche erfindungsgemäßen Lacksysteme finden Anwendung im Industrielackbereich, z.B. zur Beschichtung von metallischen Gebrauchsgegenständen, Rolltoren, Fensterrahmen, Radiatoren, Haushaltsgeräten, beispielsweise Waschmaschinen, Kühlschränken oder Herden, Elektroinstallationsmaterial, Gerätegehäusen, Maschinengehäusen, insbesondere aber für den Automobilsektor.

Erfindungsgemäße Lacksysteme für den Automobilsektor sind insbesondere Einbrennfüller, Basislacke, Klar- und Decklacke sowie Kofferraumlacke, Lacke zur Innenauskleidung und für Automobilzubehör wie Scheibenwischer, Spiegelgehäuse usw.

Ein weiterer Einsatzbereich solcher Aminoplastharz-Dispersionen ist für die Anwendung in der Holz- und Möbelindustrie in säurehärtenden Systemen in Kombination mit wäßrigen Alkyd-, Polyester, Acryl- und Polyurethan-Dispersionen bzw. Harzlösungen.

Die erfindungsgemäßen Lacksysteme weisen bevorzugt ein Gewichtsverhältnis Alkyd-, Polyester- oder Acrylharz oder Epoxidharz : Aminoplastharz von 60 : 40 bis 90 : 10 auf. Sie können im Falle von Füller-, Basis- oder Decklacksystemen im Einbrennbereich von 100 bis 200 °C und einer Einbrennzeit von 10 bis 40 Minuten bzw. im Falle von Basislacksystemen im forcierten Trocknungsbereich von 5 bis 20 Minuten bis 50 bis 90 °C verwendet werden.

Die erfindungsgemäßen Lacksysteme können Hilfs- und Zusatzmittel enthalten, insbesondere die üblichen Lackadditive. Solche Lackadditive sind beispielsweise anorganische oder organische (Farb-)Pigmente, Füllstoffe, Antiabsetzmittel, Entschäumungs- und/oder Netzmittel, Verlaufmittel, Reaktiv-Verdünner, Weichmacher, (UV-)Stabilisatoren, Katalysatoren, Rheologiehilfsmittel, wie z.B. Mikrogele oder Polyharnstoffderivate oder zusätzliche Härter. Gegebenenfalls können die genannten Additive den erfindungsgemäßen Lacksystemen auch erst unmittelbar vor der Verarbeitung zugegeben werden.

Durch den Einsatz der erfindungsgemäßen Dispersionen bzw. der erfindungsgemäßen Lacksysteme werden Lackschichten hoher Qualität erhalten, beispielsweise steinschlagfeste Einbrennfüller mit guter Schleifbarkeit, Zwischenschichthaftung und hoher Härte, Basislacke mit schneller physikalischer Trocknung, gutem optischen Effekt und Zwischenschichthaftung, Klarlacke mit hohem Glanz und hoher Härte, guter Bewitterungsstabilität und hoher Elastizität, auch bei höheren und niedrigen Einbrenntemperaturen sowie Decklacke mit hohem Glanz und hoher Beständigkeit. Im Vergleich zu den mit handelsüblichen Aminoplastharzen erhaltenen Lacken zeichnen sich die erfindungsgemäßen Lacksysteme durch eine erhöhte Reaktivität, verbesserte Überbrenntoleranz, verminderte Wasseraufnahme mit deshalb verbesserten Schwitzwasser-Testergebnissen nach DIN 51 017 als auch deutlich verbesserter Lichtbeständigkeit aus.

### Beispiele:

### A: Herstellung einer wäßrigen Melaminharz-Dispersion

1000 g einer Lösung eines butylierten Melaminharzes (®Maprenal VMF 3615) in n-Butanol, Festkörper-Massengehalt 80 %, werden unter Zusatz von 12 g eines anionisch/nichtionischen Emulgators (®Hostapal BV: äthoxyliertes Natrium-p-Nonylphenol-Sulfat) mit einem Massengehalt an Äthoxygruppen von ca. 8 % (Beispiel A-1) bzw. 8 g eines anionisch/nichtionischen Emulgators auf Basis eines äthoxylierten Alkylphenolsulfats mit einem Massengehalt an Äthoxygruppen von ca. 23 % (Beispiel A-2) mit 1500 g Wasser in einem Ultraschalldipergiergerät während 15 min vermischt. Es entstand jeweils eine feinteilige, weißliche Dispersion mit einem Feststoff-Massengehalt von 44 %.

### B: Herstellung der Zweikomponenten-Klarlacke

Entsprechend den Mengenangaben in Tabelle 1 wurden Klarlacke aus einer Hydroxylgruppen-haltigen Acrylharzdispersion (®Synthacryl VSW 1501) und einer kommerziellen Melaminharzlösung (®Maprenal VMF 3921) (Beispiel 1) sowie den gemäß Beispiel A-1 und A-2 hergestellten wäßrigen Melaminharzdispersionen (Beispiele 2 und 3) angefertigt.

**Tabelle 1:**

| **Zusammensetzung und Eigenschaften** | | | |
|---|---|---|---|
| | **Beispiel 1** | **Beispiel 2** | **Beispiel 3** |
| Festkörper MF-Harz in % | 85 % | 44 % | 44 % |
| Lackfestkörpergehalt (prakt.) in % | 37,2 | 34,2 | 35,8 |
| Lackfestkörpergehalt (berechnet) in % | 36,2 | 33,8 | 35,5 |
| MF-Harz | 10,00 | 19,36 | 19,36 |
| ®Synthacryl VSW 1501, 42 % | 81,14 | 81,14 | 81,14 |
| ®Additol XW 390/25 %ig | 0,10 | 0,10 | 0,10 |
| Butyldiglykol/Wasser 1:1 | 9,52 | 9,52 | 9,52 |
| mit DMAE auf pH-Wert | 7,98 | 8,06 | 7,96 |
| Wasser | 17 | 16 | 10 |
| Auslaufzeit (4 mm-DIN-Becher) | 18 s | 20 s | 22 s |

| **Prüfung auf Glasplatte, 200 µm Naßschichtdicke** | | | |
|---|---|---|---|
| Einbrenn-Bedingungen: 10' bei RT / 10' bei 80°C / 20' bei 140°C | | | |
| Pendelhärte nach König in s | 206 | 206 | 206 |
| **Beständigkeitsprüfung** | | | |
| Acetonfestigkeit (2 min, belastet) | 0 | 5 | 5 |
| 10%ige Schwefelsäure (17 h) | 0 | 0 | 0 |
| 10%ige Natronlauge (17 h) | 0 | 0 | 0 |
| 5%ige Kochsalzlösung (17 h) | 0 | 0 | 0 |
| E-Wasser (17 h) | 2 | 0-1 | 0-1 |
| DMAE: Dimethylaminoäthanol | | | |

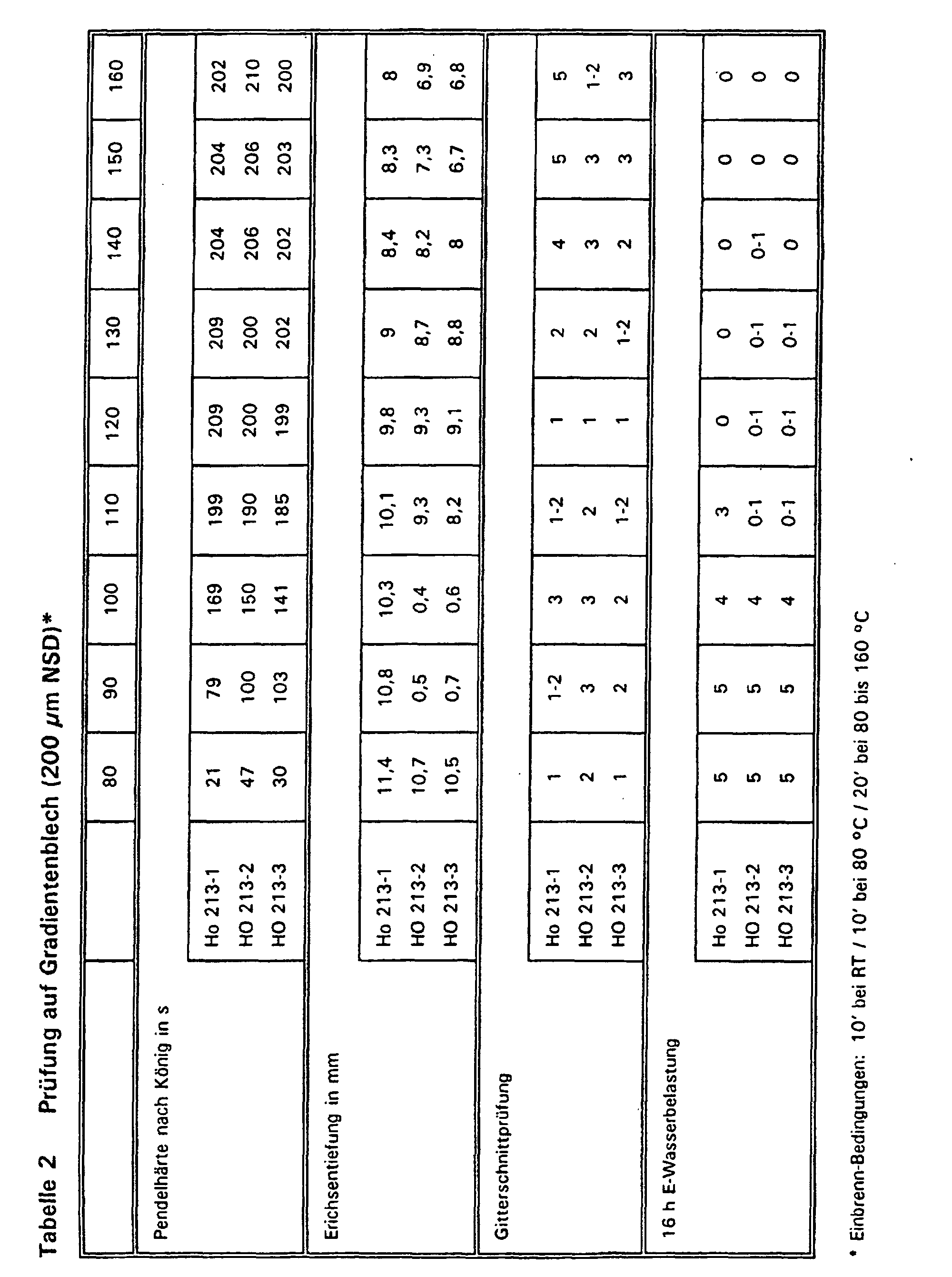

## Patentansprüche (Patentansprüche für folgende(n) Vertragsstaat(en): AT, BE, CH, DE, DK, ES, FR, GB, GR, IE, LI, IT, NL, PT, SE)

1. Wäßrige Dispersionen von butylverätherten Aminoplastharzen, **dadurch gekennzeichnet, daß** sie
10 bis 50 % eines butylverätherten oder teilweise butylverätherten Aminoplastharzes,
0 bis 15 % eines linearen oder verzweigten Alkanols mit 1 bis 10 Kohlenstoffatomen,
89,9 bis 32,5 % Wasser und
0,1 bis 5,5 % anionische Emulgatoren enthalten, wobei die Masse des Emulgators bis zu 2 % der Masse des Aminoplastharzes beträgt.

2. Wäßrige Dispersionen nach Anspruch 1, **dadurch gekennzeichnet, daß** die Aminoplastharze Reaktionsprodukte von Aminoplastbildnern mit aliphatischen Aldehyden ausgewählt aus Formaldehyd, Glyoxal und Furfurol jeweils allein oder in Mischung sind.

3. Wäßrige Dispersionen nach Anspruch 2, **dadurch gekennzeichnet, daß** als Aminoplastbildner Melamin, Ammelin, Ammelid, Acetoguanamin, Benzoguanamin, Caprinoguanamin, Harnstoff, Thioharnstoff, Äthylenharnstoff, Propylenhamstoff und Acetylenharnstoff jeweils allein oder in Mischung eingesetzt werden.

4. Wäßrige Dispersionen nach Anspruch 1, **dadurch gekennzeichnet, daß** die Aminoplastharze teilweise oder vollständig mit linearen oder verzweigten Alkanolen mit 4 Kohlenstoffatomen veräthert sind.

5. Wäßrige Dispersionen nach Anspruch 1, **dadurch gekennzeichnet, daß** die Emulgatoren jeweils mindestens ein hydrophobes Segment und ein hydrophiles Segment aufweisen.

6. Wäßrige Dispersionen nach Anspruch 1, **dadurch gekennzeichnet, daß** die Emulgatoren mindestens zwei hydrophile Segmente aufweisen, von denen jeweils mindestens eines nichtionischen und eines anionischen Charakter hat.

7. Verfahren zur Herstellung von wäßrigen Dispersionen nach Anspruch 1, **dadurch gekennzeichnet, daß** entweder das Aminoplastharz mit dem Emulgator vermischt wird und diese Mischung in einem geeigneten Mischer mit Wasser vermischt wird, oder daß zuerst der Emulgator in Wasser gelöst wird und anschließend das Aminoplastharz unter Scherung zugegeben wird.

8. Verfahren nach Anspruch 7, **dadurch gekennzeichnet, daß** eine Lösung des Aminoplastharzes in einem linearen oder verzweigten Alkanol mit 1 bis 10 Kohlenstoffatomen mit dem Emulgator vermischt wird.

9. Verfahren nach Anspruch 7, **dadurch gekennzeichnet, daß** die Vermischung der Phasen bei einer Temperatur von 20 bis 95 °C erfolgt.

10. Verwendung der Dispersionen nach Anspruch 1 als Härter in wäßrigen Bindemitteln, die Hydroxylgruppen enthalten.

11. Einkomponentenlacke enthaltend die wäßrigen Dispersionen gemäß Anspruch 1 und wäßrige Dispersionen von Hydroxylgruppen-haltigen Bindemitteln.

12. Zweikomponentenlacke enthaltend die wäßrigen Dispersionen gemäß Anspruch 1 und wäßrige Dispersionen von Hydroxylgruppen-haltigen Bindemitteln.

13. Zweikomponentenlacke gemäß Anspruch 12, die zusätzlich wäßrige Isocyanat-Dispersionen enthalten.

## Patentansprüche (Patentansprüche für folgende(n) Vertragsstaat(en): BE, DE, FR, GB, IT, NL)

1. Wäßrige Dispersionen von butylverätherten Aminoplastharzen, **dadurch gekennzeichnet, daß** sie
10 bis 50 % eines butylverätherten oder teilweise butylverätherten Aminoplastharzes,
0 bis 15 % eines linearen oder verzweigten Alkanols mit 1 bis 10 Kohlenstoffatomen,
89,9 bis 32,5 % Wasser und
0,1 bis 5,5 % anionische Emulgatoren enthalten, wobei die Masse der Emulgatoren bis zu 2 % der Masse des Aminoplastharzes beträgt, und die anionischen Emulgatoren ausgewählt sind aus anionischen Emulgatoren, deren Gegenionen Alkalimetall- oder Erdalkalimetall-Kationen sind, und solchen anionischen Emulgatoren, die zwei oder mehr hydrophile Segmente haben, wobei mindestens eines anionischen Charakter und mindestesn eines nichtionischen Charakter aufweist.

2. Wäßrige Dispersionen nach Anspruch 1, **dadurch gekennzeichnet, daß** die Aminoplastharze Reaktionsprodukte von Aminoplastbildnern mit aliphatischen Aldehyden ausgewählt aus Formaldehyd, Glyoxal und Furfurol jeweils allein oder in Mischung sind.

3. Wäßrige Dispersionen nach Anspruch 2, **dadurch gekennzeichnet, daß** als Aminoplastbildner Melamin, Ammelin, Ammelid, Acetoguanamin, Benzoguanamin, Caprinoguanamin, Harnstoff, Thioharnstoff, Äthylenharnstoff, Propylenhamstoff und Acetylenharnstoff jeweils allein oder in Mischung eingesetzt werden.

4. Wäßrige Dispersionen nach Anspruch 1, **dadurch gekennzeichnet, daß** die Aminoplastharze teilweise oder vollständig mit linearen oder verzweigten Alkanolen mit 4 Kohtenstoffatoman veräthert sind.

5. Wäßrige Dispersionen nach Anspruch 1, **dadurch gekennzeichnet, daß** die Emulgatoren jeweils mindestens ein hydrophobes Segment und ein hydrophiles Segment aufweisen.

6. Wäßrige Dispersionen nach Anspruch 1, **dadurch gekennzeichnet, daß** die Emulgatoren mindestens zwei hydrophile Segmente aufweisen, von denen jeweils mindestens eines nichtionischen und eines anionischen Charakter hat.

7. Verfahren zur Herstellung von wäßrigen Dispersionen nach Anspruch 1, **dadurch gekennzeichnet, daß** entweder das Aminoplastharz mit dem Emulgator vermischt wird und diese Mischung in einem geeigneten Mischer mit Wasser vermischt wird, oder daß zuerst der Emulgator in Wasser gelöst wird und anschließend das Aminoplastharz unter Scherung zugegeben wird.

8. Verfahren nach Anspruch 7, **dadurch gekennzeichnet, daß** eine Lösung des Aminoplastharzes in einem linearen oder verzweigten Alkanol mit 1 bis 10 Kohlenstoffatomen mit dem Emulgator vermischt wird.

9. Verfahren nach Anspruch 7, **dadurch gekennzeichnet, daß** die Vermischung der Phasen bei einer Temperatur von 20 bis 95 °C erfolgt.

10. Verwendung der Dispersionen nach Anspruch 1 als Härter in wäßrigen Bindemitteln, die Hydroxylgruppen enthalten.

11. Einkomponentenlacke enthaltend die wäßrigen Dispersionen gemäß Anspruch 1 und wäßrige Dispersionen von Hydroxylgruppen-haltigen Bindemitteln.

12. Zweikomponentenlacke enthaltend die wäßrigen Dispersionen gemäß Anspruch 1 und wäßrige Dispersionen von Hydroxylgruppen-haltigen Bindemitteln.

13. Zweikomponentenlacke gemäß Anspruch 12, die zusätzlich wäßrige Isocyanat-Dispersionen enthalten.

## Claims (Claims for the following Contracting State(s): AT, BE, CH, DE, DK, ES, FR, GB, GR, IE, LI, IT, NL, PT, SE)

1. An aqueous dispersion of butyl-etherified amino resins, which comprises
from 10 to 50 % of a butyl-etherified or partially butyl-etherified amino resin,
from 0 to 15 % of a linear or branched alkanol having 1 to 10 carbon atoms,
from 89.9 to 32.5 % of water, and
from 0.1 to 5.5 % of anionic emulsifiers, the mass of the emulsifier being up to 2 % of the mass of the amino resin.

2. An aqueous dispersion as claimed in claim 1, wherein the amino resins are reaction products of amino resin formers with aliphatic aldehydes selected from formaldehyde, glyoxal and furfurol, in each case alone or in a mixture.

3. An aqueous dispersion as claimed in claim 2, wherein the amino resin formers employed are melamine, ammeline, ammelide, acetoguanamine, benzoguanamine, capriguanamine, urea, thiourea, ethyleneurea, propyleneurea and acetyleneurea, in each case alone or in a mixture.

4. An aqueous dispersion as claimed in claim 1, wherein the amino resins are partially or completely etherified with linear or branched alkanols having 4 carbon atoms.

5. An aqueous dispersion as claimed in claim 1, wherein the emulsifiers each have at least one hydrophobic segment and one hydrophilic segment.

6. An aqueous dispersion as claimed in claim 1, wherein the emulsifiers have at least two hydrophilic segments of which in each case at least one is nonionic in nature and one is anionic in nature.

7. A process for the preparation of an aqueous dispersion as claimed in claim 1, which comprises either mixing the amino resin with the emulsifier and mixing this mixture with water in a suitable mixer or first of all dissolving the emulsifier in water and then adding the amino resin with shearing.

8. The process as claimed in claim 7, wherein a solution of the amino resin in a linear or branched alkanol having 1 to 10 carbon atoms is mixed with the emulsifier.

9. The process as claimed in claim 7, wherein the mixing of the phases takes place at a temperature of from 20 to 95°C.

10. The use of a dispersion as claimed in claim 1 as a curing agent in aqueous binders containing hydroxyl groups.

11. A one-component coating material comprising an aqueous dispersion as claimed in claim 1 and an aqueous dispersion of hydroxyl-containing binders.

12. A two-component coating material comprising an aqueous dispersion as claimed in claim 1 and an aqueous dispersion of hydroxyl-containing binders.

13. A two-component coating as claimed in claim 12, which additionally comprises an aqueous isocyanate dispersion.

## Claims (Claims for the following Contracting State(s): BE, DE, FR, GB, IT, NL)

1. An aqueous dispersion of butyl-etherified amino resins, which comprises
from 10 to 50 % of a butyl-etherified or partially butyl-etherified amino resin,
from 0 to 15 % of a linear or branched alkanol having 1 to 10 carbon atoms,
from 89.9 to 32.5 % of water, and
from 0.1 to 5.5 % of anionic emulsifiers, the mass of the emulsifiers being up to 2 % of the mass of the amino resin, and the anionic emulsifiers being selected from amongst anionic emulsifiers whose counterions are alkali metal or alkaline earth metal cations, and those, anionic emulsifiers having two or more hydrophilic segments, at least one of them being anionic in nature and at least one nonionic in nature.

2. An aqueous dispersion as claimed in claim 1, wherein the amino resins are reaction products of amino resin formers with aliphatic aldehydes selected from formaldehyde, glyoxal and furfurol, in each case alone or in a mixture.

3. An aqueous dispersion as claimed in claim 2, wherein the amino resin formers employed are melamine, ammeline, ammelide, acetoguanamine, benzoguanamine, capriguanamine, urea, thiourea, ethyleneurea, propyleneurea and acetyleneurea, in each case alone or in a mixture.

4. An aqueous dispersion as claimed in claim 1, wherein the amino resins are partially or completely etherified with linear or branched alkanols having 4 carbon atoms.

5. An aqueous dispersion as claimed in claim 1, wherein the emulsifiers each have at least one hydrophobic segment and one hydrophilic segment.

6. An aqueous dispersion as claimed in claim 1, wherein the emulsifiers have at least two hydrophilic segments of which in each case at least one is nonionic in nature and one is anionic in nature.

7. A process for the preparation of an aqueous dispersion as claimed in claim 1, which comprises either mixing the amino resin with the emulsifier and mixing this mixture with water in a suitable mixer or first of all dissolving the emulsifier in water and then adding the amino resin with shearing.

8. The process as claimed in claim 7, wherein a solution of the amino resin in a linear or branched alkanol having 1 to 10 carbon atoms is mixed with the emulsifier.

9. The process as claimed in claim 7, wherein the mixing of the phases takes place at a temperature of from 20 to 95°C.

10. The use of a dispersion as claimed in claim 1 as a curing agent in aqueous binders containing hydroxyl groups.

11. A one-component coating material comprising an aqueous dispersion as claimed in claim 1 and an aqueous dispersion of hydroxyl-containing binders.

12. A two-component coating material comprising an aqueous dispersion as claimed in claim 1 and an aqueous dispersion of hydroxyl-containing binders.

13. A two-component coating as claimed in claim 12, which additionally comprises an aqueous isocyanate dispersion.

## Revendications (Revendications pour l'(les) Etat(s) contractant(s) suivant(s): AT, BE, CH, DE, DK, ES, FR, GB, GR, IE, LI, IT, NL, PT, SE)

1. Dispersions aqueuses de résines aminoplastes éthérifiées par des groupes butyle, **caractérisées en ce qu'**elles renferment
- 10 à 50 % en poids d'une résine aminoplaste éthérifiée par des groupes butyle ou partiellement éthérifiée par des groupes butyle,
- 0 à 15 % d'un alcanol linéaire ou ramifié présentant 1 à 10 atomes de carbone,
- 89,9 à 32,5 % d'eau et
- 0,1 à 5,5 % d'émulsifiant anionique, la masse de l'émulsifiant représente jusqu'à 2 % de la masse de la résine aminoplaste.

2. Dispersions aqueuses selon la revendication 1, **caractérisées en ce que** les résines aminoplastes sont des produits réactionnels de constituants d'aminoplastes avec des aldéhydes aliphatiques pris parmi le formaldéhyde, le glyoxal, et le furfurol, seuls ou en mélange.

3. Dispersions aqueuses selon la revendication 2, **caractérisées en ce qu'**on utilise comme constituants d'aminoplastes la mélamine, l'ammeline, l'ammelide, l'acétoguanamine, la benzoguanamine, la caprinoguanamine, l'urée, la thiourée, l'éthylénurée, la propylénurée et l'acétylénurée, chacun seul ou en mélange.

4. Dispersions aqueuses selon la revendication 1, **caractérisées en ce que** les résines aminoplastes sont partiellement ou complètement éthérifiées par des alcanols linéaires ou ramifiés présentant 4 atomes de carbone.

5. Dispersions aqueuses selon la revendication 1, **caractérisées en ce que** chacun des émulsifiants présente au moins un segment hydrophobe et un segment hydrophile.

6. Dispersions aqueuses selon la revendication 1, **caractérisées en ce que** les émulsifiants présentent au moins deux segments hydrophiles, dont chaque fois au moins un possède un caractère non ionique et un possède un caractère anionique.

7. Procédé pour la préparation de dispersions aqueuses selon la revendication 1, **caractérisé en ce que**, soit on mélange la résine aminoplaste avec l'émulsifiant et on mélange ce mélange avec l'eau dans un mélangeur approprié, soit on dissout d'abord l'émulsifiant dans l'eau et ensuite on ajoute la résine aminoplaste sous contraintes de cisaillement.

8. Procédé selon la revendication 7, **caractérisé en ce qu'**on mélange une solution de la résine aminoplaste dans un alcanol linéaire ou ramifié présentant 1 à 10 atomes de carbone avec l'émulsifiant.

9. Procédé selon la revendication 7, **caractérisé en ce qu'**on réalise le mélange des phases à une température de 20 à 95°C.

10. Utilisation des dispersions selon la revendication 1 en tant que durcisseur dans des liants aqueux, qui présentent des groupes hydroxyle.

11. Peintures à un composant renfermant des dispersions aqueuses selon la revendication 1 et des dispersions aqueuses de liants présentant des groupes hydroxyle.

12. Peintures à deux composants renfermant les dispersions aqueuses selon la revendication 1 et les dispersions aqueuses de liants présentant des groupes hydroxyle.

13. Peintures à deux composants selon la revendication 12, qui renferment en plus des dispersions aqueuses d'isocyanate.

## Revendications (Revendications pour l'(les) Etat(s) contractant(s) suivant(s): BE, DE, FR, GB, IT, NL)

1. Dispersions aqueuses de résines aminoplastes éthérifiées par des groupes butyle, **caractérisées en ce qu'**elles renferment
- 10 à 50 % en poids d'une résine aminoplaste éthérifiée par des groupes butyle ou partiellement éthérifiée par des groupes butyle,
- 0 à 15 % d'un alcanol linéaire ou ramifié présentant 1 à 10 atomes de carbone,
- 89,9 à 32,5 % d'eau et
- 0,1 à 5,5 % d'émulsifiant anionique, la masse de l'émulsifiant représente jusqu'à 2 % de la masse de la résine aminoplaste,
et les émulsifiants anioniques sont pris parmi les émulsifiants anioniques, dont les contre-ions sont des cations de métaux alcalins ou alcalino-terreux, et de tels émulsifiants anioniques, qui présentent deux ou plus de segments hydrophiles; au moins un présente un caractère anionique et au moins un présente un caractère non ionique.

2. Dispersions aqueuses selon la revendication 1, **caractérisées en ce que** les résines aminoplastes sont des produits réactionnels de constituants d'aminoplastes avec des aldéhydes aliphatiques pris parmi le formaldéhyde, le glyoxal, et le furfurol, seuls ou en mélange.

3. Dispersions aqueuses selon la revendication 2, **caractérisées en ce qu'**on utilise comme constituants d'aminoplastes la mélamine, l'ammeline, l'ammelide, l'acétoguanamine, la benzoguanamine, la caprinoguanamine, l'urée, la thiourée, l'éthylénurée, la propylénurée et l'acétylénurée, chacun seul ou en mélange.

4. Dispersions aqueuses selon la revendication 1, **caractérisées en ce que** les résines aminoplastes sont partiellement ou complètement éthérifiées par des alcanols linéaires ou ramifiés présentant 4 atomes de carbone.

5. Dispersions aqueuses selon la revendication 1, **caractérisées en ce que** chacun des émulsifiants présente au moins un segment hydrophobe et un segment hydrophile.

6. Dispersions aqueuses selon la revendication 1, **caractérisées en ce que** les émulsifiants présentent au moins deux segments hydrophiles, dont chaque fois au moins un possède un caractère non ionique et un possède un caractère anionique.

7. Procédé pour la préparation de dispersions aqueuses selon la revendication 1, **caractérisé en ce que**, soit on mélange la résine aminoplaste avec l'émulsifiant et on mélange ce mélange avec l'eau dans un mélangeur approprié, soit on dissout d'abord l'émulsifiant dans l'eau et ensuite on ajoute la résine aminoplaste sous contraintes de cisaillement.

8. Procédé selon la revendication 7, **caractérisé en ce qu'**on mélange une solution de la résine aminoplaste dans un alcanol linéaire ou ramifié présentant 1 à 10 atomes de carbone avec l'émulsifiant.

9. Procédé selon la revendication 7, **caractérisé en ce qu'**on réalise le mélange des phases à une température de 20 à 95°C.

10. Utilisation des dispersions selon la revendication 1 en tant que durcisseur dans des liants aqueux, qui présentent des groupes hydroxyle.

11. Peintures à un composant renfermant des dispersions aqueuses selon la revendication 1 et des dispersions aqueuses de liants présentant des groupes hydroxyle.

12. Peintures à deux composants renfermant les dispersions aqueuses selon la revendication 1 et les dispersions aqueuses de liants présentant des groupes hydroxyle.

13. Peintures à deux composants selon la revendication 12, qui renferment en plus des dispersions aqueuses d'isocyanate.
